# EUROPÄISCHE PATENTSCHRIFT

(11) **EP 1 101 054 B1**
(45) Veröffentlichungstag und Bekanntmachung des Hinweises auf die Patenterteilung: **21.01.2004**
(21) Anmeldenummer: 99936605.7
(22) Anmeldetag: 24.07.1999
(51) Int. Cl.: F16K 31/00, G05D 23/02

(54) **VENTIL FÜR WARMWASSERANLAGEN**
VALVE FOR HOT-WATER SYSTEMS
VALVE DESTINEE A DES INSTALLATIONS A EAU CHAUDE

(30) Priorität: 29.07.1998 DE 19834151
(43) Veröffentlichungstag der Anmeldung: 23.05.2001
(73) Patentinhaber: HONEYWELL AG, 63067 Offenbach am Main (DE)
(72) Erfinder: PIETSCH, Jürgen, D-44581 Castrop-Rauxel (DE)
(74) Vertreter: Fritz, Edmund Lothar, Dipl.-Chem.
(86) Internationale Anmeldenummer: PCT/EP1999/005308
(87) Internationale Veröffentlichungsnummer: WO 2000/006931

(56) Entgegenhaltungen:
- EP-A- 0 718 563
- DE-A- 2 351 715
- DE-A- 2 929 352
- DE-A- 19 643 902
- FR-A- 2 573 841
- US-A- 4 220 178
- US-A- 5 325 830

## Beschreibung

Die vorliegende Erfindung bezieht sich auf ein Ventil für Warmwasseranlagen nach dem Gattungsbegriff des unabhängigen Anspruchs 1.

Eine derartige Armatur dient der genauen Einhaltung der Wassertemperatur in Trinkwasser-Zirkulationssystemen und ist in ihrem grundsätzlichen Aufbau aus dem DE-U-9420412 bekannt.

In Trinkwassererwärmungs- und Leitungsanlagen kommt es darauf an, Bedingungen einzuhalten, unter denen es nicht zu einer gesundheitsgefährdenden Vermehrung von Legionellen kommen kann. Wenn sich Legionellen in erwärmtem Trinkwasser vermehren und dieses Wasser als Aerosol vom Menschen eingeatmet wird, können grippeähnliche Erkrankungsbilder bis hin zu schwer verlaufenden Lungenentzündungen verursacht werden. Neuerdings wird zum Abtöten von in dem System sich möglicherweise bildenden Legionellen eine intervallmäßige thermische Desinfektion des Anlagensystems oberhalb von 70°C gefordert.

Die vorliegende Erfindung bezweckt eine Ausgestaltung des Ventils in solcher Weise, daß eine derartige Desinfektion ermöglicht wird. Die Lösung dieser Aufgabe gelingt gemäß den Merkmalen des unabhängigen Patentanspruchs.

Anhand von in den Figuren der beiliegenden Zeichnung dargestellten Ausführungsbeispielen sei im folgenden die Erfindung näher erläutert. Es zeigen:
- Fig. 1: einen Längsschnitt durch ein Ventil mit Thermostatregler gemäß einer Ausführungsform, die nicht Bestandteil der Erfindung
- Fig. 1a: einen vergrößerten Ausschnitt Y aus Fig. 1 zur Veranschaulichung der Ventilstellung bei einer Wassertemperatur von 53 bis 55°C:
- Fig. 1b: den gleichen Ausschnitt zur Veranschaulichung der Ventilstellung bei einer Wassertemperatur von 70°C;
- Fig. 2: einen Längsschnitt durch ein Ventil mit Thermostatregler gemäß einer ersten erfindungsgemäßen Ausführungsform;
- Fig. 2a: einen vergrößerten Querschnitt Y aus Fig. 2 zur Veranschaulichung der Ventilstellung bei einer Wassertemperatur von 53 - 55°C;
- Fig. 2b: den gleichen Ausschnitt zur Veranschaulichung der Ventilstellung bei einer Wassertemperatur von 70°C;
- Fig. 3: einen Längsschnitt durch ein Ventil mit Thermostatregler gemäß einer zweiten erfindungsgemäßen Ausführungsform;
- Fig. 3a: einen vergrößerten Ausschnitt Y aus Fig. 3 zur Veranschaulichung der Ventilstellung bei einer Wassertemperatur von 53 - 55°C; und
- Fig. 3b: den gleichen Ausschnitt zur Veranschaulichung der Ventilstellung bei einer Wassertemperatur von 70°C.

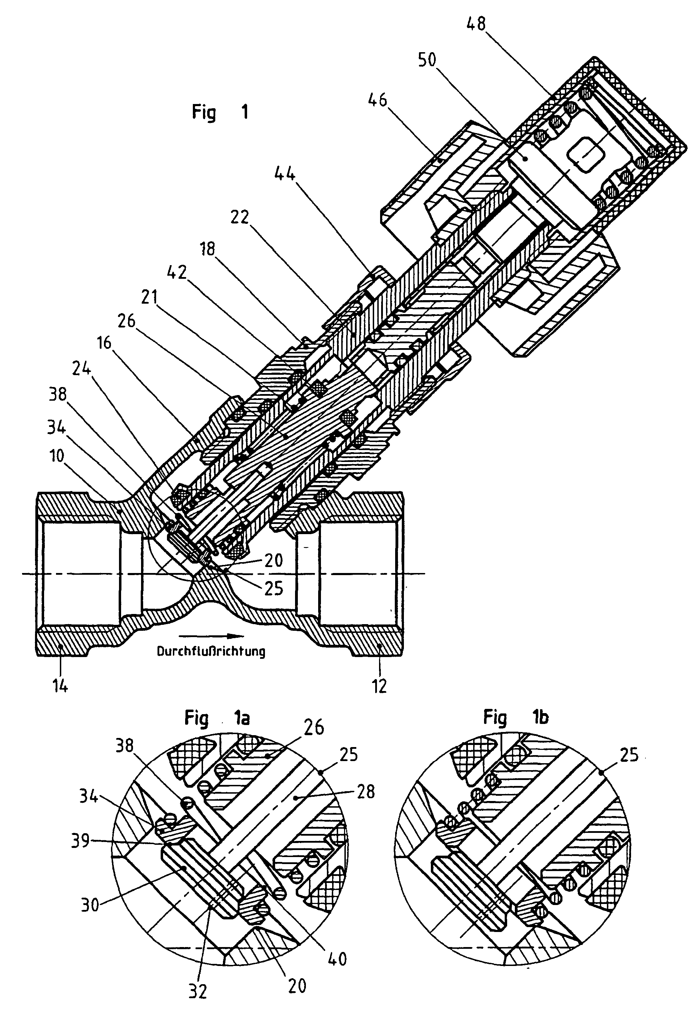

Gemäß Fig. 1 sind an einem Gehäuse 10 eines Ventiles sich gegenüberliegend Anschlußstutzen 12 und 14 angedeutet, die zum Strang bzw. zum Verbraucher führen. Ein schräg gerichteter Schraubstutzen 16 dient zur Aufnahme eines eingeschraubten Ventiloberteiles 18. Im Innern des Gehäuses 10 ist ein Ventilsitz 20 ausgebildet, gegen den ein erstes an einer hohlen Ventilspindel 22 angeordnetes Verschlußstück 24 wirkt. Im Prinzip bestimmt die Stellung dieses ersten Verschlußstückes 24 zum entsprechenden Ventilsitz 20 die Voreinstellung für den Durchfluß. Mit diesem ersten Verschlußstück 24 ist zudem das Ventil absperrbar.

Im unteren Hohlraum der Ventilspindel 22 ist ein zweites Verschlußstück 25 gegen eine Feder 21 verschiebbar. Das Verschlußstück 25 ist gemäß den Vergrößerungen Y in Fig. 1a und Fig. 1b dargestellt und umfaßt:

Einen mit einem Ventilkegel 26 über eine Ventilstange 28 in Antriebsverbindung stehenden Schließkörper 30, der in den Gehäuseventilsitz 20 hineinragt und mit einer Leckagebohrung 32 versehen ist; einen durch Feder 38 belasteten Sitzring 34, der einerseits an dem Gehäuseventilsitz 20 oder am Schließkörper 30 und andererseits am Ventilkegel 26 zur Anlage gelangen kann, wobei die sich gegenüberliegenden Stirnflächen des Ventilkegels 26 und des Sitzringes 34 einen Regelspalt vorgeben.

Die Oberkante des Sitzringes 34 arbeitet hierbei als weiterer Ventilsitz 40 mit der Unterkante des Ventilkegels 26 zusammen.

Fig. 1a zeigt die Stellung des Verschlußstückes 25 bei einer Temperatur von 53 - 55°C. In dieser Stellung fließt das Wasser durch die Leckagebohrung 32 und über den Ventilsitz 20. Bei Erreichen der Solltemperatur von 55°C schließt das Dehnstoffelement im thermischen Regelaufsatz durch Vorschieben des Ventilkegels den Ventilsitz 20. Es fließt nur noch eine minimale Wassermenge durch die Leckagebohrung 32. Wird durch Erhöhen der Wassertemperatur auf mehr als 60°C eine thermische Desinfektion eingeleitet, so schiebt das Dehnstoffelement den Ventilkegel weiter vor, so daß der Ventilsitz 39 zwischen Schließkörper 30 und Sitzring 34 geöffnet wird. Wenn die Desinfektionstemperatur von 70°C erreicht ist. so wird die zur Konstanthaltung der Temperatur erforderliche Wassermenge am Ventilsitz 40 zwischen Sitzring 34 und Ventilkegel 26 geregelt.

Die weiter noch in Fig. 1 bezeichneten Elemente betreffen eine Dichtung 42, eine Justiermutter 44, ein Handrad 46 und ein in einem thermischen Regelaufsatz 48 angeordnetes Dehnstoffelement 50, die in ihrem Aufbau und ihrer Wirkungsweise bekannter Natur sind. Hierbei bewirkt insbesondere die durch das Dehnstoffelement 50 gefühlte Wassertemperatur die Verstellung des Ventilkegels 26 und die unterschiedlichen Stellungen der Elemente des zweiten Verschlußstückes 25.

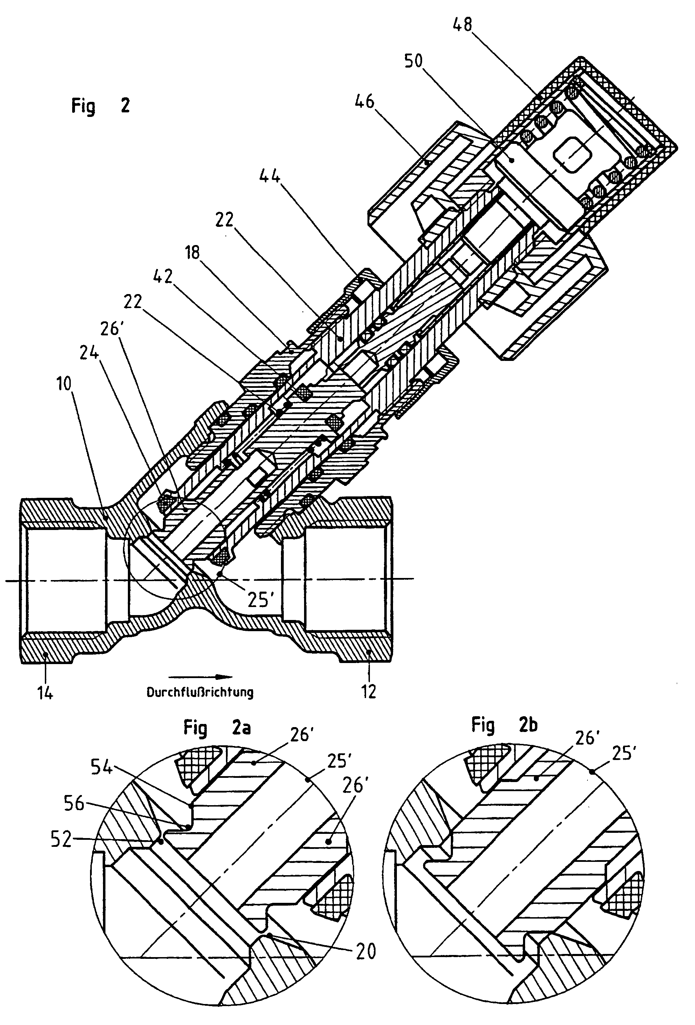

Gemäß Fig. 2 ist im wesentlichen das gleiche Ventil wie in Fig. 1 dargestellt, so daß soweit der Aufbau übereinstimmend ist, hier nicht nochmals eine Beschreibung erfolgen soll.

Im Gegensatz zu Fig. 1 ragt in Fig. 2 der Ventilkegel 26' mit seinem hohlen Unterteil bis in den Bereich des Ventilsitzes 20 und bildet ein zweites modifiziertes Verschlußstück 25'.

Dieses modifizierte Verschlußstück 25' weist am unteren Ende des hohlen Ventilkegels 26' eine umlaufende erste Drosselkante 52 auf, mit der der Ventilkegel in und durch den Gehäuseventilsitz 20 greifen kann. Im Abstand hinter der ersten Drosselkante 52 ist eine zweite umlaufende Drosselkante 54 am Ventilkegel 26' angeordnet, die an dem Gehäuseventilsitz 20 zur Anlage gelangen kann. Zwischen beiden umlaufenden Drosselkanten 52. 54 befindet sich eine Einschnürung 56 an dem Ventilkegel 26'.

Fig. 2a zeigt die Stellung des Verschlußstückes 25' bei einer Wassertemperatur von 53 - 55°C. Das Ventil ist hierbei geöffnet und es fließt Wasser über den Ventilsitz 20. Bei Erreichen der Solltemperatur von 55°C drosselt das Dehnstoffelement im thermischen Regelaufsatz durch Vorschieben des Ventilkegels die durch das Ventil fließende Wassermenge auf ein Minimum. Das Wasser fließt hierbei über den engen Ringspalt zwischen der Drosselkante 52 und dem Ventilsitz 20. Wird durch Erhöhen der Wassertemperatur auf mehr als 60°C eine thermische Desinfektion eingeleitet, so schiebt das Dehnstoffelement den Ventilkegel weiter vor und die durch das Ventil fließende Wassermenge erhöht sich. Dies entspricht einer Zwischenstellung zwischen den Figuren 2a und 2b, wobei insbesondere die Einschnürung 56 für den vergrößerten Durchtrittsquerschnitt sorgt. Ist die Desinfektionstemperatur von 70°C erreicht, so wird die zur Konstanthaltung der Temperatur erforderliche Wassermenge zwischen der Drosselkante 54 und dem Ventilsitz 20 geregelt, wie dies in Fig. 2b gezeigt ist.

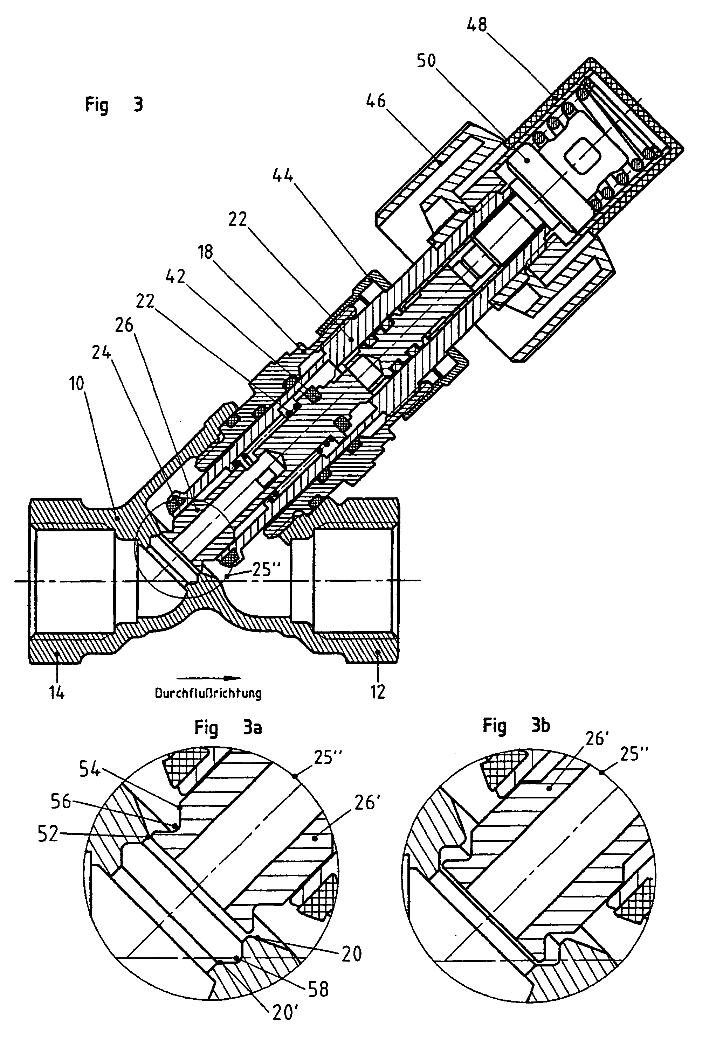

Die Figuren 3, 3a und 3b zeigen eine Variante gegenüber den Figuren 2, 2a und 2b, bei der der Ventilsitz modifiziert wurde. Erneut ist der Ventilkegel 26' an seiner Vorderkante mit einer umlaufenden Drosselkante 52 versehen, die durch den Ventilsitz 20 hindurchgreifen kann und mit einer dahinter angeordneten zweiten Drosselkante 54, deren Durchmesser größer als der Durchmesser des Ventilsitzes 20 ist, wobei zwischen beiden Drosselkanten 52, 54 eine Einschnürung 56 vorgesehen ist. Der Ventilsitz ist jedoch modifiziert und umfaßt nunmehr zusätzlich zu dem Ventilsitz 20 in Schließrichtung dahinter einen weiteren Ventilsitz 20' mit einem verringerten Durchmesser auf. wobei zwischen beiden Ventilsitzen 20. 20' im Ventilgehäuse 10 eine Einschnürung 58 angeordnet ist.

Bei einer Temperatur des Wassers zwischen 53 und 55°C fließt das Wasser gemäß Fig. 3a zwischen dem Ventilsitz 20 und der vorderen Drosselkante 52. Beim Erreichen der Solltemperatur von 55°C schließt das Dehnstoffelement im thermischen Regelaufsatz durch Vorschieben des Ventilkegels 26' den Ventilsitz 20, so daß nur noch Wasser über den Ringspalt zwischen der Drosselkante 52 und dem Ventilsitz 20 fließt. Wird durch Erhöhen der Wassertemperatur auf mehr als 60°C eine thermische Desinfektion eingeleitet, so schiebt das Dehnstoffelement den Ventilkegel weiter vor und die durch das Ventil fließende Wassermenge erhöht sich. Dies entspricht einer Zwischenstellung zwischen den Figuren 3a und 3b. wobei insbesondere die Einschnürung 56 und Nut 58 für den vergrößerten Durchflußquerschnitt sorgt. Ist die Desinfektionstemperatur von 70°C erreicht, so wird die zur Konstanthaltung der Temperatur erforderliche Wassermenge zwischen der Drosselkante 52 und dem weiteren Ventilsitz 20' geregelt, wie dies in Fig. 3b gezeigt ist.

## Patentansprüche

1. Ventil für Warmwasseranlagen, bei dem an einem Gehäuse (10) ein Anschlussstutzen (14) zum Strang, ein Anschlussstutzen (12) zum Verbraucher und ein Schraubstutzen zur Aufnahme eines Ventiloberteiles (18) mit einem an einer hohlen Ventilspindel (22) angeordneten ersten Verschlussstück (24), welches mit einem Ventilsitz im Gehäuse eine drosselartige Voreinstellung für den Durchfluß bildet, vorgesehen sind und in der hohlen Ventilspindel ein von außen gegen den Druck einer Feder betätigbares zweites Ventilverschlussstück (25',25") gegenüber einem entsprechenden Ventilsitz in der Ventilspindel von außen verschiebbar ist zur Entleerung eines Stranges über die Ventilspindel, wobei dieses zweite Ventilverschlussstück mit seinem dem Entleerungsventilsitz gegenüberliegenden Ende durch das erste Ventilverschlussstück hindurch in Richtung auf den Gehäuseventilsitz verschiebbar ist und bei dem auf die Ventilspindel ein Thermostatregler (48) mit seinem Gehäuse aufgeschraubt ist mit einem gegen einem Überhubfeder wirkenden Dehnstoffelement (50), dessen Kolben über einen Ventilkegel (2b') gegen das zweite Verschlussstück wirkt, **dadurch gekennzeichnet, dass** das zweite Verschlussstück (25', 25") umfasst:
a) eine erste umlaufende Drosselkante (52) am Ventilkegel (26'), mit der er in und durch den Gehäuseventilsitz (20) greifen kann;
b) eine zweite hinter der ersten Drosselkante (52) angeordnete umlaufende Drosselkante (54) am Ventilkegel (26'), die an dem Gehäuseventilsitz (20) zur Anlage gelangen kann; und
c) eine Einschnürung (56) zwischen beiden umlaufenden Drosselkanten (52, 54).

2. Ventil nach Anspruch 1 **dadurch gekennzeichnet, dass** das zweite Verschlussstück (25") umfasst
a) einen weiteren Gehäuseventilsitz (20') in Fließrichtung vor dem ersten Gehäuseventilsitz (20) dessen Durchmesser geringer als der Durchmesser der ersten Drosselkante (52) ist;
b) und eine Einschnürung (58) zwischen beiden Gehäuseventilsitzen (20, 20').

## Claims

1. Valve for hot-water systems, in which, provided on a housing (10), are a connecting branch (14) to the train of pipes, a connecting branch (12) to the consumer and a screw socket for holding a valve upper part (18) by a first closure piece (24) which is arranged on a hollow valve spindle (22) and, together with a valve seat in the housing, forms a restriction-like pre-setting for the throughflow, and in the hollow valve spindle a second valve closure piece (25', 25"), which can be actuated from the outside counter to the pressure of a spring, can be displaced from the outside with respect to a corresponding valve seat in the valve spindle for the purpose of emptying a train of pipes via the valve spindle, it being possible for this second valve closure piece to be displaced by its end lying opposite the emptying valve seat through the first valve closure piece in the direction of the housing valve seat, and in which a thermostatic controller (48) is screwed by its housing on to the valve spindle and has an expanding element (50) which acts counter to an excess travel spring and whose plunger acts against the second closure piece via a valve cone (26'), **characterized in that** the second closure piece (25', 25") comprises:
a) a first peripheral restricting edge (52) on the valve cone (26'), with which the said cone can grip into and through the housing valve seat (20);
b) a second peripheral restricting edge (54), arranged behind the first restricting edge (52), on the valve cone (26'), which restricting edge can come to bear against the housing valve seat (20); and
c) a constriction (56) between the two peripheral restricting edges (52,54).

2. Valve according to claim 1, **characterized in that** the second closure piece (25") comprises:
a) a further housing valve seat (20') upstream, in the direction of flow, of the first housing valve seat (20), the diameter of which further housing valve seat is smaller than the diameter of the first restricting edge (52); and
b) a constriction (58) between the two housing valve seats (20, 20') .

## Revendications

1. Soupape pour installations d'eau chaude, dans laquelle sont prévus sur un boîtier (10) un raccord (14) à la canalisation, un raccord (12) au consommateur et un raccord vissé pour recevoir une partie supérieure de soupape (18) avec une première pièce de fermeture (24) disposée sur une tige de soupape creuse (22), qui forme avec un siège de soupape dans le boîtier un préajustement de type étranglement pou l'écoulement, et dans la tige de soupape creuse une deuxième pièce de fermeture de soupape (25', 25") actionnable depuis l'extérieur à l'encontre de la pression d'un ressort peut être déplacée par rapport à un siège de soupape correspondant depuis l'extérieur dans la tige de soupape, pour vider une canalisation par le biais de la tige de soupape, cette deuxième pièce de fermeture de soupape pouvant être déplacée avec son extrémité opposée au siège de soupape de vidange à travers la première pièce de fermeture de soupape dans la direction du siège de soupape de carter et dans laquelle, sur la tige de soupape est vissé un régulateur à thermostat (48) avec son boîtier, avec un élément en matière extensible (50) agissant à l'encontre d'un ressort de course excessive, dont le piston agit par le biais d'un cône de soupape (26') contre la deuxième pièce de fermeture, **caractérisée en ce que** la deuxième pièce de fermeture (25', 25") comprend :
a) une première arête d'étranglement périphérique (52) sur le cône de soupape (26'), avec laquelle il peut venir en prise dans et à travers le siège de soupape de boîtier (20) ;
b) une deuxième arête d'étranglement (54) périphérique disposée derrière la première arête d'étranglement (52) sur le cône de soupape (26'), laquelle peut venir en butée contre le siège de soupape de boîtier (20) ; et
c) un rétrécissement (56) entre les deux arêtes d'étranglement périphériques (52, 54).

2. Soupape selon la revendication 1, **caractérisée en ce que** la deuxième pièce de fermeture (25") comprend :
a) un autre siège de soupape de boîtier (20') dans la direction d'écoulement avant le premier siège de soupape de boîtier (20) dont le diamètre est inférieur au diamètre de la première arête d'étranglement (52) ;
b) et un rétrécissement (58) entre les deux sièges de soupape de boîtier (20, 20').
